# EUROPÄISCHE PATENTSCHRIFT

(11) **EP 2 401 116 B1**
(45) Veröffentlichungstag und Bekanntmachung des Hinweises auf die Patenterteilung: **12.11.2014**
(21) Anmeldenummer: 10715662.2
(22) Anmeldetag: 01.03.2010
(51) Int. Cl.: B25H 3/02, G07F 11/36

(54) **MODULARER WERKZEUGAUTOMAT**
MODULAR AUTOMATED TOOL DISPENSER
DISTRIBUTEUR AUTOMATIQUE D'OUTILS MODULAIRE

(30) Priorität: 27.02.2009 DE 102009010880
(43) Veröffentlichungstag der Anmeldung: 04.01.2012
(73) Patentinhaber: Gühring OHG, 72458 Albstadt (DE)
(72) Erfinder: BÜRGER, Hans, 73614 Schorndorf (DE); LANG, Steffen, Klaus, 72461 Albstadt-Tailfingen (DE)
(74) Vertreter: Meitinger, Thomas Heinz
(86) Internationale Anmeldenummer: PCT/DE2010/000219
(87) Internationale Veröffentlichungsnummer: WO 2010/097077

(56) Entgegenhaltungen:
- EP-A2- 1 256 913
- WO-A1-2005/028165
- WO-A2-2006/113533
- WO-A2-2008/067510
- GB-A- 921 243
- US-A- 5 172 829
- US-A- 5 205 436
- US-A1- 2004 104 652
- US-A1- 2007 205 704
- US-A1- 2008 309 583

## Beschreibung

Die vorliegende Erfindung betrifft einen modularen Werkzeugautomaten zur Ausgabe von Werkzeugen gemäß dem Oberbegriff des Anspruchs 1.

Eine solche Vorrichtung ist aus US 5 205 436 A bekannt.

Werkzeugautomaten ermöglichen einen schnellen Zugriff auf Werkzeug- und Zubehörteile und eine Senkung der Werkzeugkosten. Sie erlauben ferner eine kontrollierte Werkzeugausgabe an autorisierte Personen und durch eine integrierte Software jederzeit einen Überblick über den Verbrauch einzelner Werkzeuge und somit über deren Standzeiten und Qualitäten. Durch die Automatisierung der Werkzeugautomaten ist ferner ein 24-Stunden-Werkzeugzugriff, also auch während Schichtzeiten, ohne intensive Personalkosten möglich. Erfahrungen haben außerdem gezeigt, dass der Werkzeugverschleiß durch den Einsatz von Werkzeugautomaten stark verringert wird, da - je nach System - jeder Mitarbeiter selbst für sein Werkzeug verantwortlich ist und bei der Ausgabe erfasst werden kann. Kosteneinsparungen von 20% bis 40% sind realistisch. Es ist ferner bekannt, mit dem Werkzeugmanagement über ein derartiges System eine externe Firma zu beauftragen, wobei diese über die integrierte Software und ein geeignetes Netzwerk stets über den aktuellen Werkzeugbestand informiert sein und automatisch Werkzeuge nachliefern kann.

Die bekannten Werkzeugautomaten haben jedoch den Nachteil einer zu geringen Flexibilität und unzureichenden Anpassungsmöglichkeit an individuelle und betriebsorganisatorische Wünsche, Anforderungen und Änderungen, so dass das Potential der oben genannten Vorteile nicht ausgeschöpft werden kann.

Es ist daher eine Aufgabe der vorliegenden Erfindung, die genannten Nachteile zu überwinden.

Diese Aufgabe wird durch die Merkmale des Anspruchs 1 gelöst. Vorteilhafte Ausgestaltungen sind in den Unteransprüchen definiert.

Wie beansprucht, umfasst ein modularer Werkzeugautomat wenigstens ein Werkzeugausgabemodul, das wenigstens ein Werkzeugfach, in dem eine Vielzahl von zu Werkzeugklassen zusammengefassten Werkzeugen angeordnet sind, und eine Vielzahl von Werkzeugfördervorrichtungen, die jeweils einer der Werkzeugklassen zugeordnet sind und Werkzeuge der einen Werkzeugklasse zu einer Werkzeugausgabestelle fördern, wobei die Werkzeugklassen jeweils durch den Werkzeugtyp, die Werkzeuggröße und/oder das Werkzeuggewicht als Werkzeugparameter definiert sind; und eine Werkzeugauswahlvorrichtung zur Auswahl der gewünschten Werkzeugklasse und Menge der auszugebenden Werkzeuge und Aktivierung der der ausgewählten Werkzeugklasse zugeordneten Werkzeugvorrichtung.

Erfindungsgemäß umfasst das wenigstens eine Werkzeugausgabemodul eine Mehrzahl von nebeneinander und/oder übereinander angeordneten Werkzeugfächern, denen entweder jeweils eine eigene oder eine gemeinsame Werkzeugausgabestelle zugeordnet ist, wobei die Fallhöhe der Werkzeuge von der Werkzeugfördervorrichtung zu der Werkzeugausgabestelle bei schweren Werkzeugen geringer ist als bei leichten Werkzeugen.

Gemäß der Erfindung umfasst jeder Werkzeugautomat wenigstens ein Werkzeugausgabemodul mit wenigstens einem Werkzeugfach, in dem Werkzeuge nach Werkzeugklassen sortiert angeordnet sind, wobei jedes Werkzeugfach Werkzeuge von nur einer Werkzeugklasse oder Werkzeuge von mehreren Werkzeugklassen enthalten kann. Befinden sich in einem Werkzeugfach nur Werkzeugklassen, die zusammen mit ihren zugeordneten Werkzeugfördervorrichtungen in ihren die jeweilige Werkzeugfachgröße bestimmenden Abmessungen vergleichbar sind, so muss die Werkzeugfachgröße nicht an die größte, darin enthaltene Werkzeugklasse angepasst sein, was sich vorteilhaft auf die Größe des Werkzeugautomaten auswirkt. Die Werkzeugfördervorrichtung bildet die kleinste "Ordnungseinheit" des erfindungsgemäßen Werkzeugautomaten: Mehrere Werkzeugfördervorrichtungen sind in einem Werkzeugfach zusammengefasst, wenigstens ein Werkzeugfach wiederum zu einem Modul, und wenigstens ein Modul bildet wiederum einen "Ausgabeteil" des Werkzeugautomaten, mit dem die Werkzeugauswahlvorrichtung, vorteilhafterweise als weiteres Modul, verbunden ist. Oder anders gesagt: Das modulare Konzept setzt sich von außen nach innen fort. Je nach Betriebsorganisation, Platzangebot etc. kann dabei einem oder mehreren der oben genannten Werkzeugparameter Vorrang eingeräumt werden. Ein Werkzeugparameter "Werkzeugtyp" ist zum Beispiel ein Bohrer, ein Fräser etc. Ein Werkzeugparameter "Werkzeuggröße" ist zum Beispiel ein Bohrerdurchmesser, ein Schleifscheibendurchmesser, eine Feinheit eines Schleifwerkzeugs etc. Insbesondere ist die Werkzeugauswahlvorrichtung, die als Bedienfeld, Tastatur, Touch-Screen etc. ausgebildet sein kann, nicht vom modularen Konzept ausgeschlossen. Die Werkzeugauswahlvorrichtung kann ferner mit einem Drucker zum Ausdrucken von Entnahmeprotokollen bzw. -belegen ausgestattet sein.

Durch die Merkmale des Anspruchs 2 der vorliegenden Erfindung sind mehrere identische, insbesondere kleinere Werkzeuge wie Wendeschneidplatten, also Werkzeuge, die in allen Parametern übereinstimmen, in Packungen, hierin als Werkzeugeinheiten bezeichnet, zusammengefasst, so dass solche Werkzeuge nicht einzeln ausgegeben werden. Damit wird dem Umstand Rechnung getragen, dass kleinere Werkzeuge schneller verschleißen und somit häufiger getauscht werden müssen. Es ist daher vorteilhaft, auch um Wegzeiten zwischen einer Werkzeugmaschine und dem erfindungsgemäßen Werkzeugautomaten so kurz wie möglich zu halten, solche Werkzeuge nicht einzeln auszugeben. Ein weiterer Vorteil besteht darin, dass die Werkzeuge, die vorzugsweise verpackt in dem Werkzeugautomaten aufbewahrt sind, dann nicht einzeln verpackt werden müssen.

Erfindungsgemäß ist in einer ersten Variante jedem von einer Mehrzahl von in geeigneter aber grundsätzlich beliebiger Weise in einem Werkzeugausgabemodul angeordneten Werkzeugfächern eine eigene Werkzeugausgabestelle zugeordnet. Dies hat insbesondere dann, wenn in einem Werkzeugfach nur Werkzeuge einer möglichst vollständig durch Werkzeugtyp, Werkzeuggröße und Werkzeuggewicht definierten Werkzeugklasse enthalten sind, also z. B. nur Bohrer eines wohl definierten Größenbereichs, zum einen den Vorteil, dass ein gezielter Zugriff auf das jeweilige Fach durch den Arbeiter möglich ist, und zum anderen den Vorteil - insbesondere, wenn die Werkzeugklasse durch die Werkzeuggröße definiert ist - dass die einzelnen Werkzeugfächer platzsparend und damit in größerer Anzahl innerhalb des Werkzeugausgabemoduls angeordnet sein können.

Durch die Merkmale dieser ersten Variante der Erfindung ergibt sich der Vorteil, dass der erfindungsgemäße Werkzeugautomat einfacher und somit weniger störungsanfällig und daher sowohl im Kauf als auch in der Wartung kostengünstiger konzipiert werden kann, da dadurch die Anzahl der Werkzeugausgabestellen verringert ist. Vorteilhafterweise sind dann in den einer jeweiligen Werkzeugausgabestelle zugeordneten Werkzeugfächern ähnliche Werkzeuge enthalten, d.h. die Werkzeugklassen, denen diese Werkzeuge zugeordnet sind, stimmen in mehreren der oben genannten Parametern überein.

Erfindungsgemäß wird in einer zweiten Variante eine Anordnung der Werkzeuge innerhalb eines Werkzeugausgabemoduls vorgesehen, bei der mehreren nebeneinander und/oder übereinander angeordneten Werkzeugfächern eine gemeinsame Werkzeugausgabestelle zugeordnet ist. Dabei sei z. B. angenommen, dass die Werkzeugfächer übereinander angeordnet sind und sich die Werkzeugausgabestelle im Wesentlichen auf gleicher Höhe mit dem untersten Werkzeugfach befindet. Somit ist es sinnvoll, die schwersten Werkzeuge möglichst weit unten zu platzieren.

Ferner kann erfindungsgemäße die Fallhöhe und somit die Härte des Aufpralls des Werkzeugs durch eine geeignete Gestaltung der Werkzeugausgabestelle dadurch verringert werden, dass vorgesehen ist, dass die Fallhöhe der Werkzeuge von der Werkzeugfördervorrichtung zu der Werkzeugausgabestelle bei schweren Werkzeugen geringer ist als bei leichten Werkzeugen.

Während durch das Merkmal bezüglich der Fallhöhe eine Anordnung definiert ist, wonach die Werkzeuge innerhalb eines Werkzeugausgabemoduls mit einer für alle darin aufgenommenen Werkzeugfächer gemeinsamen Werkzeugausgabestelle an einer umso tiefer gelegenen Position angeordnet sind, je schwerer sie sind, um so eine Beschädigung des Werkzeugs und / oder des Werkzeugautomaten zu vermeiden, richten sich die Merkmale des Anspruchs 6 auf die Gesundheit des Arbeiters und somit nicht auf die "relative" Position innerhalb eines Werkzeugausgabemoduls, sondern auf die "absolute" Position innerhalb des Werkzeugautomaten. Hierbei wird dem Parameter "Gewicht" gegenüber den Parametern Typ und Größe bei der Anordnung des Werkzeugs in dem Werkzeugautomaten Vorrang eingeräumt. Enthält der erfindungsgemäße Werkzeugautomat mehrere Werkzeugfächer, die alle in einem Werkzeugausgabemodul oder auf mehrere Werkzeugausgabemodule verteilt angeordnet sein können, so ist es vor diesem Hintergrund vorteilhaft, die darin enthaltenen Werkzeugklassen aus Werkzeugen zu bilden, die im Wesentlichen in dem Parameter Gewicht übereinstimmen, und diese Werkzeuge bzw. Werkzeugklassen in Höhen bzw. an Positionen anzuordnen, die dem Arbeiter ein ergonomisches Entnehmen ermöglichen.

Durch die Merkmale des Anspruchs 4 in den Varianten (a) und (b9 kann das Werkzeug leicht nach oben entnommen werden, was insbesondere bei schweren Werkzeugen der Fall ist, ohne in den Werkzeugautomaten, z. B. in einen Schacht, hineingreifen zu müssen. Dadurch ist das Werkzeug deutlich sichtbar und kann günstig gegriffen werden. Es ist zu beachten, dass gemäß Anspruch 4a die Werkzeugausgabestelle in Form einer "schwenkbaren Rinne" ausgebildet ist, während sie gemäß Anspruch 4b in Form einer "um eine horizontale Achse klappbaren Klappe" ausgebildet ist. Im ersten Fall (Anspruch 4a) bildet die Werkzeugausgabestelle selbst ein "Auffangbehältnis", in den das ausgewählte Werkzeug nach erfolgter Auswahl fällt, während im zweiten Fall (Anspruch 4b) die Werkzeugausgabestelle als Klappe lediglich den Zugang zu einem Bereich ermöglicht, in den das ausgegebene Werkzeug nach erfolgter Auswahl fällt.

Durch die Ausgestaltung der Werkzeugausgabestelle als Schublade (kurz "schubladenartige Werkzeugausgabestelle"), wie es in Anspruch 4 in Variante (c) definiert ist, ergeben sich - neben der bestehenden und oben beschriebenen Möglichkeit - weitere Möglichkeiten der Anordnung der Werkzeugausgabestelle relativ zu der (den) Werkzeugfördervorrichtung(en); die Werkzeuge können auf andere Weise aus dem jeweiligen Werkzeugfach in die (Anspruch 4a) oder zu der (Anspruch 4b) Werkzeugausgabestelle befördert werden. Das heißt, gemäß den Ansprüchen 7 und 8 muss ein Werkzeug, das sich weiter hinten im Werkzeugfach befindet, durch die Werkzeugfördervorrichtung nach vorn gefördert werden, wo sich die schwenk- bzw. klappbare Werkzeugausgabestelle befindet. Die schwenk- bzw. klappbare Werkzeugausgabestelle befindet sich stets am Ende der Förderstrecke. Gemäß Anspruch 4c hingegen ist die Werkzeugausgabestelle als Schublade ausgebildet. Die Schublade kann eine relativ geringe Tiefe aufweisen, so dass sie sich lediglich bis zum (vorderen) Ende der Förderstrecke der Werkzeugfördervorrichtung erstreckt. In diesem Fall lässt sich die Schublade problemlos in eine die Frontseite des wenigstens einen Werkzeugmoduls oder des Werkzeugautomaten verschießende Tür integrieren (Anspruch 7). Bei dieser Konstruktion erstreckt sich vorteilhafterweise die Werkzeugfördervorrichtung über die gesamte Tiefe (von vorn nach hinten) eines

Werkzeugträgers, durch den die Werkzeuge getragen werden. Alternativ kann sich die Schublade bis unter die Werkzeugfördervorrichtung erstrecken. In diesem Fall (Anspruch 19) ist es möglich, entweder auf eine Förderspirale (oder eine vergleichbare Fördereinrichtung), wie sie in Anspruch 9 definiert ist, zu verzichten (wenn sich die Werkzeugausgabestelle bis ganz nach hinten erstreckt) oder eine kürzere Fördereinrichtung zu verwenden. Wenn sich das Werkzeug in der Schließstellung über der als Schublade ausgebildeten Werkzeugausgabestelle befindet, ist es möglich, das ausgewählte Werkzeug durch Lösen eines Haltemechanismus einfach in die darunter befindliche Schublade fallen zu lassen. Die Schublade kann dann von Hand oder, wie es in Anspruch 5 definiert ist, motorisch betätigt werden. Der Haltemechanismus kann entweder in Form eines Hakens oder dergleichen ausgebildet sein, an dem das Werkzeug hängend aufbewahrt wird, oder in Form einer Abdeckung eines als Bodenplatte ausgebildeten Werkzeugträgers, auf dem das Werkzeug ruht und die durch einen geeigneten Steuerimpuls entfernt, z. B. unter dem Werkzeug weggeschoben werden kann. Gemäß einer vorteilhaften Ausgestaltung kann auch, gewissermaßen als Mischform, eine Schublade z. B. in Form eines Drehtellers ausgebildet sein, der um eine vertikale Achse schwenkbar ist.

Gemäß einer vorteilhaften Ausgestaltung der vorliegenden Erfindung kann die Schublade mit der klappbaren Klappe oder der schwenkbaren Rinne kombiniert sein. In diesem Fall kann das Werkzeug durch Herausziehen der Schublade entnommen werden, wenn der Klapp- oder Schwenkmechanismus defekt sein sollte. Im Normalfall kann das Werkzeug durch Herausziehen der Schublade oder über die in der Schublade integrierte Klappe oder Rinne entnommen werden.

Durch die Merkmale des Anspruchs 5 lässt sich die Werkzeugausgabestelle, zum Beispiel eine schwenkbare Rinne (Anspruch 4a), eine klappbare Klappe (Anspruch 4b) oder eine Schublade (Anspruch 4c) zum Öffnen und / oder Schließen motorisch betätigen. Vorteilhaft beim motorischen Schließen ist, dass sich der Arbeiter, nachdem er das Werkzeug entnommen und somit u. U. keine Hand frei hat, nicht um das Schließen kümmern muss; dieses kann nach einer vorbestimmten Zeit automatisch erfolgen, und/oder das Schließen kann durch eine Lichtschranke ausgelöst werden oder lässt sich durch Betätigen eines Schalters, zum Beispiel eines Fußschalters, ausführen.

Vorteilhaft beim motorischen Öffnen ist, dass die Werkzeugausgabestelle nicht aus Versehen zu früh geöffnet wird. Insbesondere kann dadurch verhindert werden, dass das Werkzeug hinter die sich in ihrer Offenstellung befindliche Werkzeugausgabestelle fällt, sofern keine geeignete anderweitige Vorkehrung getroffen ist, um dies zu verhindern. Alternativ kann das Öffnen der Werkzeugausgabestelle erst dann freigegeben werden, wenn die Förderung des Werkzeugs mit Hilfe der Werkzeugvorrichtung abgeschlossen ist, so dass gewährleistet ist, dass sich das Werkzeug in (Anspruch 4a) bzw. bei (Anspruch 4b) der Werkzeugausgabestelle befindet. Ferner kann die Software des erfindungsgemäßen Werkzeugautomaten ein gleichzeitiges Anfordern mehrerer Werkzeuge ermöglichen, die - sofern bestimmte Kriterien erfüllt sind, z. B. die Tatsache, dass die Werkzeuge nicht aufeinander fallen -dann gemeinsam ausgegeben werden, so dass durch die reduzierte Anzahl von Öffnungs-/Schließvorgängen die Abnutzung der Werkzeugausgabestelle verringert ist.

Die Merkmale des Anspruchs 7 der vorliegenden Erfindung ermöglichen ein einfaches und schnelles Bestücken des Werkzeugautomaten, indem gleichzeitig alle Werkzeugfächer von der Frontseite zugänglich sind Der freie Zugang zu den Werkzeugfächern und Werkzeugfördervorrichtungen ist darüber hinaus im Reparaturbzw. Wartungsfallfall vorteilhaft.

Alternativ zu der in Anspruch 7 definierten Tür kann auch eine Tür vorgesehen sein, die lediglich ein zugeordnetes Werkzeugfach oder ausgewählte Werkzeugfächer überdeckt, so dass die Werkzeugausgabestelle selbst nicht in der Tür integriert, sondern z. B. in der Frontseite des Werkzeugautomaten unterhalb dieser angeordnet ist.

Die in Anspruch 8 definierten Merkmale betonen das modulare Konzept des erfindungsgemäßen "modularen Werkzeugautomaten", wobei die Anordnung der einzelnen Werkzeugausgabemodule grundsätzlich nicht vorgegeben oder begrenzt ist. Vielmehr lassen sich die Werkzeugausgabemodule beliebig anordnen und somit nach bevorzugten Kriterien zu einer Einheit - oben als "Ausgabeteil" bezeichnet -zusammenfügen. Hat zum Beispiel das Gewicht als einer der Werkzeugparameter nicht die oben hervorgehobene Relevanz, d. h. enthält der Werkzeugautomat zum Beispiel nur leichte Teile, so kann die Anordnung der Module nach anderen Gesichtspunkten erfolgen.

Gemäß den Merkmalendes Anspruchs 9 können die Werkzeuge auf einem Werkzeugträger mittels einer Förderspirale und eines Drehantriebs in Richtung der Werkzeugausgabestelle gefördert werden, wobei Werkzeugträger, Förderspirale und Drehantrieb Elemente der Werkzeugfördervorrichtung sind. Wie es in Anspruch 1 definiert ist, ist jeder so aufgebauten Werkzeugfördervorrichtung eine bestimmte Werkzeugklasse zugeordnet, oder anders formuliert: Durch die Gestaltung der Werkzeugfördervorrichtung gemäß Anspruch 9, d. h. unter anderem der Festlegung der Steigung und des Durchmessers der Spirale und deren Position relativ zu dem Werkzeugträger ist eine optimale Anpassung an die Werkzeuge der der Werkzeugfördervorrichtung zugeordneten Werkzeugklasse möglich. Die Verwendung geeigneter Transporthilfsmittel (Bauteileschieber) erweitert die Möglichkeiten konstruktiver Gestaltung und Auslegung. So ist es zur Förderung des Werkzeugs nicht erforderlich, dass dieses direkt von der Förderspirale "gegriffen" wird. Quer zur Längsachse der Förderspirale können zum Beispiel Transportstäbe oder dergleichen angeordnet sein, die von der Förderspirale mitgenommen werden und ihrerseits das Werkzeug mitnehmen, das somit auch kleiner als der Durchmesser der Förderspirale sein kann. Dadurch, dass die Größe der Förderspirale nicht unbedingt der Größe des zu fördernden Werkzeugs entsprechen muss, ergibt sich eine Vereinfachung des erfindungsgemäßen Werkzeugautomaten dahingehend, dass in einem weiten Größenbereich der Werkzeuge gleich große Förderspiralen verwendet werden können. Der Werkzeugträger kann ferner aus mehreren Teilen aufgebaut sein, die das Werkzeug an geeigneten Stellen und in einer geeigneten Position stützen.

Vorteilhafterweise sind die Werkzeugträger gemäß Anspruch 10 ausgebildet, also geradlinig. Daraus folgt, dass die Förderspirale vorteilhafterweise ebenfalls geradlinig und parallel zu dem Werkzeugträger ausgebildet bzw. angeordnet ist. Dies erlaubt eine kompakte Bauweise und ist insbesondere bei einer Ausbildung des Werkzeugfachs in Form einer Schublade bei der Bestückung des Werkzeugautomaten vorteilhaft. Die relative Anordnung von Förderspirale, Werkzeugträger und evt. Transporthilfsmittel gemäß den Ansprüchen 10 bis 13 kann vorteilhafterweise an die jeweiligen Werkzeugparameter angepasst werden.

Durch die Merkmale des Anspruchs 14 ist eine Änderung der Bestückung des erfindungsgemäßen Werkzeugautomaten zum Beispiel aufgrund einer geänderten oder sich häufig wechselnder Produktpalette problemlos. Insbesondere ist ein Betrieb, der den erfindungsgemäßen Werkzeugautomaten erwirbt und aufstellt, nicht auf eine bestimmte Dimensionierung festgelegt, so dass andere Werkzeuge andere Werkzeugfächer etc. bedingen würden.

Durch die Merkmale der Ansprüche 15 bis 17 ist die Bedienung des Werkzeugautomaten anwenderfreundlich, die Rückkopplung der mit Hilfe der Werkzeugauswahlvorrichtung gemachten Angaben können vorteilhafterweise korrigiert werden, so dass eine zum Beispiel durch einen Zahlendreher falsche Werkzeugausgabe weitestgehend vermieden wird.

Gemäß einem weiteren Aspekt umfasst ein Verfahren zur Ausgabe von Werkzeugen mit Hilfe des Werkzeugautomaten wie oben beschrieben mindestens die folgenden Schritte: Auswählen eines Werkzeugs und Eingeben der Anzahl auszugebender Werkzeuge durch Betätigen der Werkzeugauswahlvorrichtung; Aktivieren der jeweiligen Werkzeugfördervorrichtung durch die Werkzeugauswahlvorrichtung; Öffnen der Werkzeugausgabestelle; und Schließen der Werkzeugausgabestelle nach Entnahme des Werkzeugs.

Die obigen und weitere Aufgaben, Eigenschaften und Vorteile der vorliegenden Erfindung sind aus der nachfolgenden detaillierten Beschreibung, die unter Bezugnahme auf die beigefügten Zeichnungen gemacht wurde, deutlicher ersichtlich. In den Zeichnungen sind:
Fig. 1 eine Gesamtansicht von schräg vorn einer beispielhaften Ausführungsform eines modularen Werkzeugautomaten gemäß der vorliegenden Erfindung;
Fig. 2 eine Frontansicht einer beispielhaften Ausführungsform eines modularen Werkzeugautomaten gemäß der vorliegenden Erfindung;
Fign. 3 und 4 beispielhafte Förderspiralen und Werkzeugträger des modularen Werkzeugautomaten gemäß der vorliegenden Erfindung;
Fign. 5 und 6 beispielhafte Bestückungen von Werkzeugfördervorrichtungen des modularen Werkzeugautomaten gemäß der vorliegenden Erfindung;
Fign. 7A und 7B schematische Seitenansichten zweier Varianten eines Werkzeugfachs eines modularen Werkzeugautomaten gemäß einer beispielhaften Ausführungsform der vorliegenden Erfindung; und Fig. 7C die Entnahme eines Werkzeugs aus der Werkzeugausgabestelle durch einen Arbeiter;
Fign. 8A bis 8D schematische Seiten- und Vorderansichten eines Werkzeugfachs eines modularen Werkzeugautomaten gemäß einer beispielhaften Ausführungsform der vorliegenden Erfindung;
Fig. 9 eine beispielhafte Werkzeugeinheit gemäß der vorliegenden Erfindung neben einem Einzelwerkstück des gleichen Typs;
Fign. 10 bis 16 beispielhafte Werkzeugausgabestellen des modularen Werkzeugautomaten gemäß der vorliegenden Erfindung;
Fig. 17 eine schematische Seitenansicht eines Werkzeugmoduls gemäß einer Ausführungsform der vorliegenden Erfindung, wobei mehreren Werkzeugfächern eine einzige Werkzeugausgabestelle zugeordnet ist;
Fig. 18 eine schematische Seitenansicht eines Werkzeugmoduls gemäß einer Ausführungsform der vorliegenden Erfindung, wobei jedem Werkzeugfach eine Werkzeugausgabestelle zugeordnet ist; und
Fig. 19 eine schematische Seitenansicht eines Werkzeugmoduls gemäß einer Ausführungsform der vorliegenden Erfindung, wobei jedem Werkzeugfach eine Werkzeugausgabestelle zugeordnet ist.

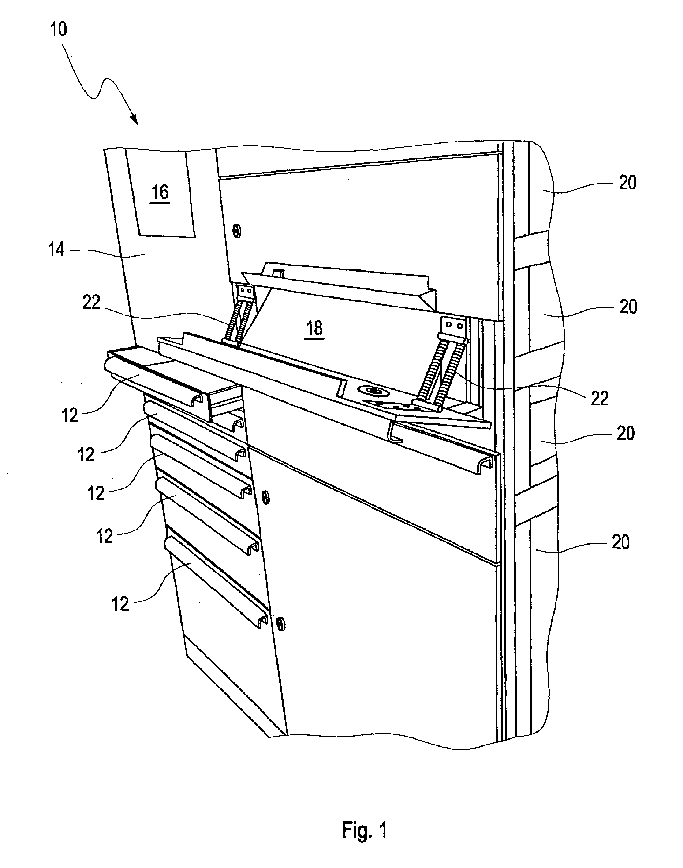

Fig. 1 zeigt eine Gesamtansicht von schräg vorn einer beispielhaften Ausführungsform eines modularen Werkzeugautomaten 10 gemäß der vorliegenden Erfindung. Wie es in Fig. 1 gezeigt ist, umfasst der Werkzeugautomat 10 eine Mehrzahl von schubladenartigen Werkzeugausgabestellen 12 mit ergonomischen Handgriffleisten, eine Werkzeugauswahlvorrichtung 14 mit einer Anzeige 16 und eine Mehrzahl von schwenkbaren Werkzeugausgabestellen 18, die jeweils in Form einer im Wesentlichen waagerechten Rinne ausgebildet sind. Die Abdeckung auf der rechten Seite des Werkzeugautomaten 10 ist in Fig. 1 entfernt, so dass die sich von der Frontseite des Werkzeugautomaten 10 nach hinten erstreckenden Werkzeugfächer 20, welche jeweils mit einer der schwenkbaren Werkzeugausgabestellen 18 verbunden sind, sichtbar sind. Wie es in Fig. 1 gezeigt ist, ist sowohl die Größe der schubladenartigen Werkzeugausgabestellen 12 als auch die Größe der schwenkbaren Werkzeugausgabestellen 18 unterschiedlich; sie kann je nach Bedarf gewählt werden. Insbesondere ist die in Fig. 1 gezeigte Zusammenstellung der Module nur beispielhaft. Ferner erfolgt, wie es in Fig. 1 durch Handgriffleisten und einen Federmechanismus 22 der schwenkbaren Werkzeugausgabestellen 18 gezeigt ist, gemäß dieser Ausführungsform die Betätigung von Hand. Alternativ kann ein (elektro-) motorisch betätigbarer Mechanismus vorgesehen sein. Die Auswahl bzw. Eingabe erfolgt gemäß der Ausführungsform über die als Touch-Screen ausgebildeten Anzeige 16. Die Eingabe kann jedoch ebenso über eine Tastatur oder dergleichen erfolgen.

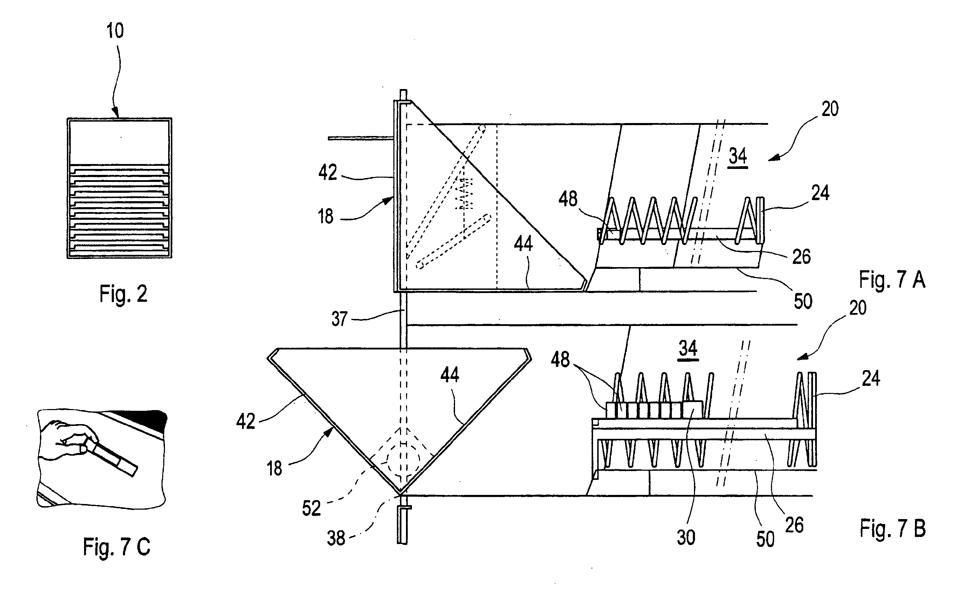

Fig. 2 zeigt eine Frontansicht einer weiteren beispielhaften Ausführungsform eines modularen Werkzeugautomaten 10 gemäß der vorliegenden Erfindung. Der Werkzeugautomat 10 umfasst eine Mehrzahl von sich über seine gesamte Breite erstreckende Klappen in einer Fronttüre 37, die manuell oder motorisch betätigt werden können.

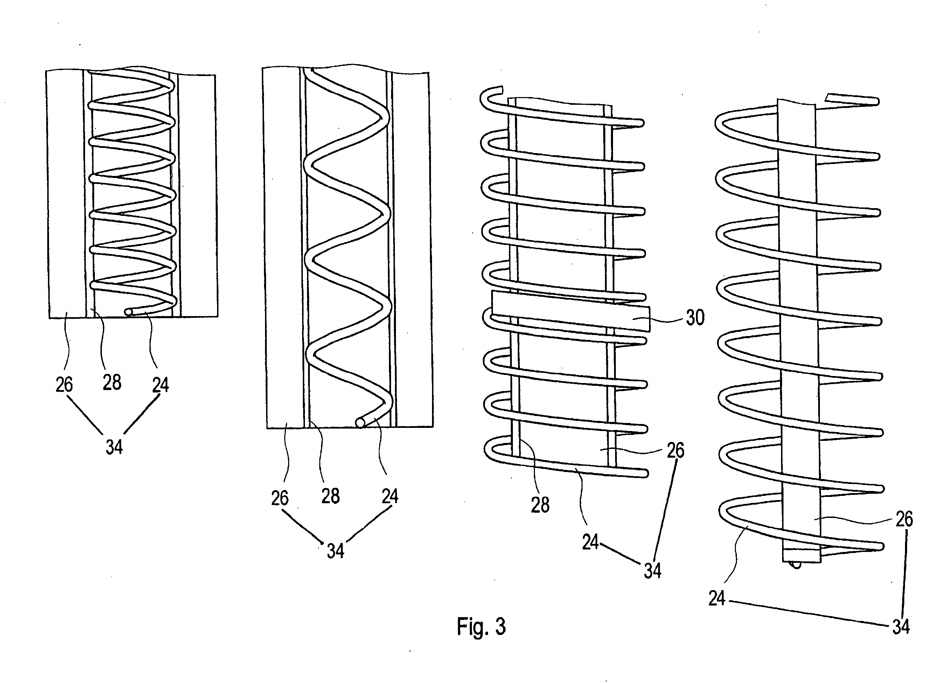

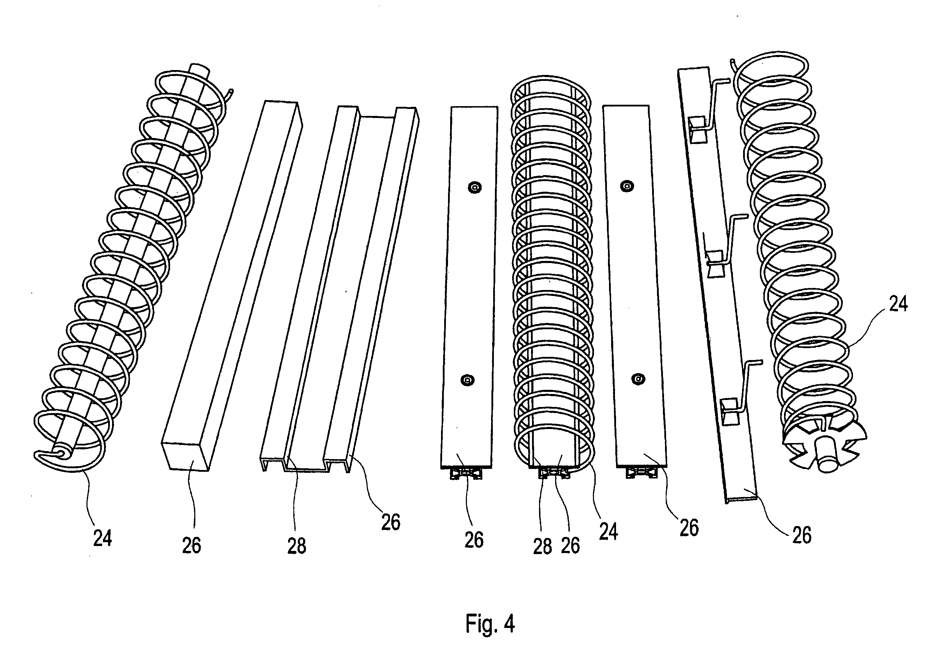

Die Fign. 3 und 4 zeigen verschiedene Ausgestaltungen von Förderspiralen 24 und Werkzeugträgern 26, wobei insbesondere in Fig. 4 die verschiedenen Querschnitte der als allgemein stabförmige Profilelemente ausgebildeten Werkzeugträger 26; die Querschnitte sind z. B. rechteckig oder rund oder in einer Form eines Doppel-T-Trägers ausgebildet, so dass durch entsprechende Erhöhungen der Längsseiten gegenüber dem Mittelteil des Werkzeugträgers 26 eine Art Rinne 28 gebildet ist. Die Rinne 28 dient der Aufnahme der Förderspirale 24 und/oder des Werkzeugs. Die Förderspiralen 24 können so bemessen sein, dass sie durch die Rinne 28 eine seitliche Fixierung erfahren, wie es z. B. in Fig. 3 bei den beiden linken Ausgestaltungen gezeigt ist, oder so bemessen sein, dass sie den Werkzeugträger 26 umgeben, wie es z. B. in Fig. 3 bei den beiden rechten Ausgestaltungen gezeigt ist. Die in den Fign. 3 und 4 gezeigten Ausgestaltungen sind nur beispielhaft; jede Querschnittsform des Werkzeugträgers 26 kann grundsätzlich verwendet werden, sie orientiert sich an Größe und Form des zu fördernden Werkzeugs. Wie es in Fig. 3 gezeigt ist, sind die Steigungen der Förderspiralen 24 ebenfalls verschieden. Auch die Steigungen richten sich nach dem zu fördernden Werkstück und an der Art und Weise, wie das Werkstück von der Förderspirale 24 gegriffen wird. Eine erfindungsgemäße Werkzeugfördervorrichtung 34 umfasst eine Kombination aus einer geeigneten Förderspirale 24 - oder einem anderen, nicht spiralförmig ausgebildeten Fördermittel - und einem geeigneten Werkzeugträger 26, die vorzugsweise aber nicht notwendigerweise geradlinig und parallel zueinander ausgeführt bzw. angeordnet sind. Wie es in Fig. 3 gezeigt ist, kann zur Förderung kleiner Werkzeuge, d. h. Werkzeuge, die auf dem Werkzeugträger 26 liegend bzw. stehend oder hängend von der Förderspirale 24 nicht gegriffen und mitgenommen werden, ein Bauteile- bzw. Werkzeugschieber 30 (im Folgenden kurz "Bauteileschieber 30" genannt) verwendet werden, der z. B. durch den Werkzeugträger 26 gestützt und in Eingriff mit der Förderspirale 24 ist. Der Bauteileschieber 30 wird durch Drehen der Förderspirale 24 von dieser in Richtung einer Werkzeugausgabestelle bewegt und schiebt ein Werkzeug oder eine Werkzeugeinheit mit sich. Werkzeugträger 26 mit rundem Querschnitt, wie es beispielsweise in der rechten Ausgestaltung von Fig. 3 und in der linken Ausgestaltung von Fig. 4 gezeigt ist, sind besonders vorteilhaft, wenn das Werkzeug oder die Werkzeugeinheit "aufgefädelt" bzw. hängend transportiert werden kann, wie dies z. B. bei Schleifscheiben der Fall sein kann.

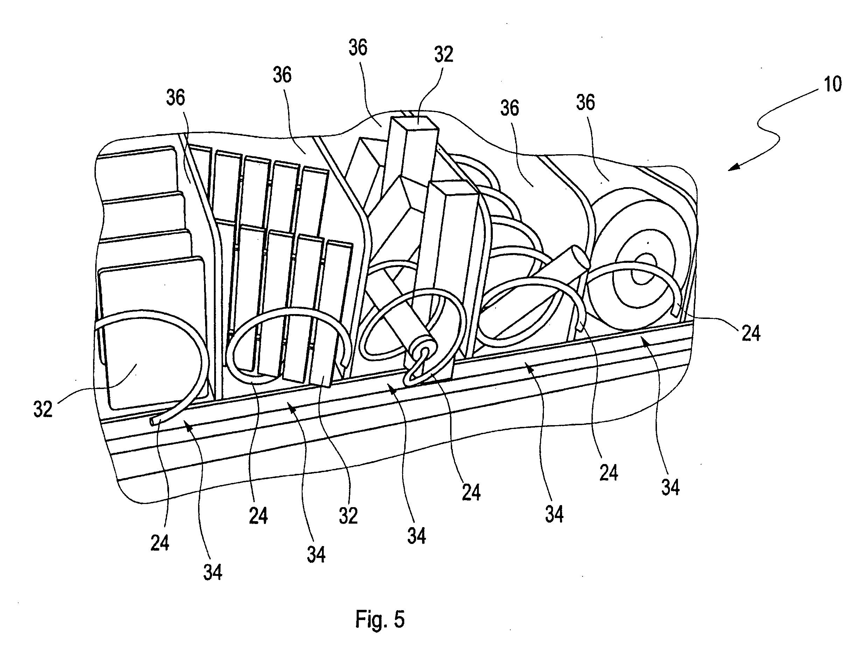

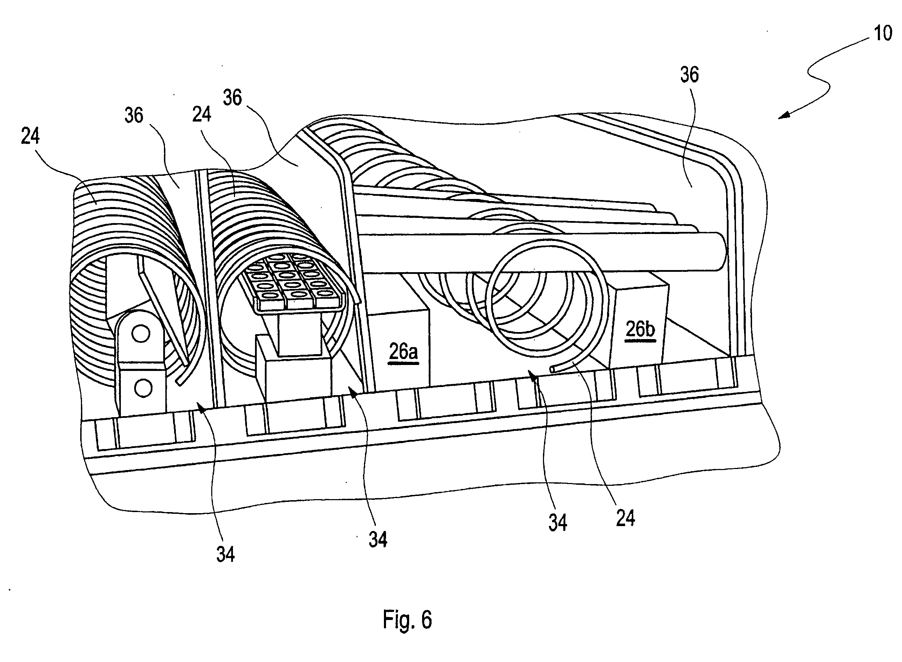

Die Fign. 5 und 6 zeigen beispielhafte Bestückungen der Werkzeugfördervorrichtungen 34. Wie es in Fig. 5 gezeigt ist, können Werkzeuge in Form von Päckchen, Schachteln oder dergleichen als erfindungsgemäße Werkzeugeinheiten 32 durch die Förderspirale 24 gefördert werden, so dass durch einmalige Auswahl durch einen Arbeiter nicht ein einzelnes Werkzeug, sondern eine vorbestimmte Anzahl gleichartiger Werkzeuge ausgegeben werden. Ganz rechts in Fig. 5 ist eine "aufgefädelte" Schleifscheibe gezeigt. Wie es in Fig. 6 gezeigt ist, ist die Breite der Werkzeugfördervorrichtungen 34, die hier durch Trennwände 36 gegeneinander abgegrenzt sind, sehr unterschiedlich und an das zu fördernde Werkzeug angepasst. Insbesondere ist in Fig. 6 deutlich zu erkennen, dass bei etwa gleich großen Durchmesser der Förderspiralen 24 Werkzeuge mit sehr unterschiedlichen Abmessungen gefördert werden können. So befindet sich gemäß der in Fig. 6 gezeigten Werkzeugauswahl das Werkzeug entweder innerhalb der Förderspirale 24 (im Fall der beiden linken Werkzeugfördervorrichtungen 34) oder ragt beidseits weit über die Förderspirale 24 hinaus. Insbesondere im letztgenannten Fall (rechte Werkzeugfördervorrichtung 34 in Fig. 6) ist der Werkzeugträger 26 aus einem ersten Trägerteil 26a und einem zweiten Trägerteil 26b gebildet, auf dem die Werkzeuge im Wesentlich in horizontaler Richtung aufliegen, und die Förderspirale 24 ist in dieser Ausgestaltung zwischen den beiden Trägerteilen 26a, 26b angeordnet.

Fig. 7 zeigt eine schematische Seitenansicht von zwei Varianten eines Werkzeugfachs, insbesondere einer Werkzeugfördervorrichtung 34, des in Fig. 2 gezeigten modularen Werkzeugautomaten 10. Der Werkzeugautomat 10 umfasst die Fronttür 37, in der um eine untere, horizontale Achse 38 schwenkbare Rinnen 18 als erfindungsgemäße Werkzeugausgabestellen angeordnet sind. Die Rinnen 18 weisen eine Frontabdeckung 42 und ein Werkzeugauffangteil 44 auf, die im Wesentlichen in einem rechten Winkel miteinander verbunden sind, und sind entweder manuell über einen in jeder Frontabdeckung 42 vertikal oder horizontal verlaufenden Handgriff, wie es in Fig. 7A gezeigt ist, oder motorisch über einen geeigneten Stellmotor 52, wie es in Fig. 7B gezeigt ist, schließ- und offenbar. Die zwei Varianten der Fign. 7A und 7B unterscheiden sich ferner in der Größe der dargestellten Förderspiralen 24 im Verhältnis zu einem zu fördernden Werkzeug 48. Wie es in Fig. 7A gezeigt ist, bildet das Werkzeugauffangteil 44 im geschlossenen Zustand der Rinne 18 gewissermaßen eine Fortsetzung des Bodens eines Werkzeugfachs 20, in dem die Werkzeugfördervorrichtungen 34 aufgenommen sind. Durch Drehen der Förderspirale 24 werden die Werkzeuge 48 nach links in der Figur gefördert und fallen auf das Werkzeugauffangteil 44. Anschließend wird die Rinne 18 entweder handbetätigt (Fig. 7A) oder automatisch (Fig. 7B) mit Hilfe des Stellmotors 52 um die Achse 38 geschwenkt, so dass sie die in Fig. 7B dargestellte Position erreicht und das Werkzeug von außen leicht entnommen werden kann (vgl. Fig. 7C). Zur Bewegung des Werkzeugs 48 in Richtung der Rinne 18 wird der Bauteileschieber 30 (vgl. Fig. 7B) als Transporthilfsmittel verwendet, welcher mit der Förderspirale 24 in Eingriff steht. Der Winkel zwischen der Frontabdeckung 42 und dem Werkzeugauffangteil 44 muss nicht im Wesentlichen 90° betragen, wie es in Fig. 7 dargestellt ist, er kann zum Beispiel auch kleiner als 90° sein. In diesem Fall wäre das Werkzeugauffangteil 44 bei geschlossener Rinne 18 zur Förderspirale 24 geneigt, so dass die Fallhöhe und die Härte des Aufpralls des Werkzeugs 48 vorteilhafterweise verringert wären. Wie es in den Fign. 7A und 713 gezeigt ist, wird die Förderspirale 24 von einem Spiralenträger 50 gestützt.

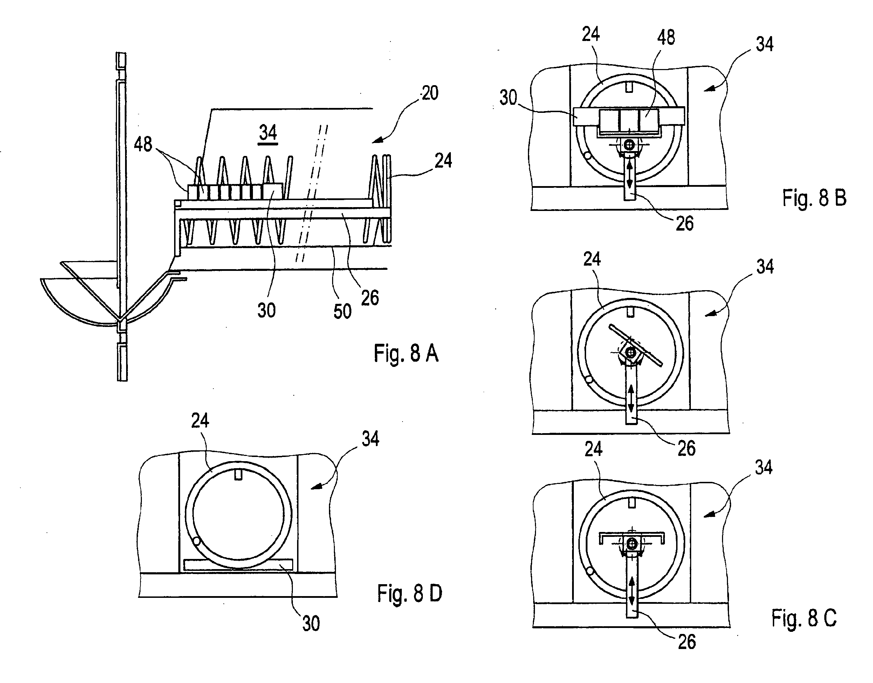

Fig. 8A zeigt eine zu der Fit 7B äquivalente Ansicht. Fig. 8B zeigt eine Draufsicht, d. h. eine Ansicht von links in Fig. 8A auf die Anordnung aus Förderspirale 24 und Bauteileschieber 30, wobei deutlich der Eingriff des Bauteileschiebers 30 in die das Werkstück bzw. die Werkstücke 48 umgebende Förderspirale 24 zu erkennen ist. Ferner ist der Werkzeugträger 26, wie es in Fig. 8B und Fig. 8C durch Pfeile gezeigt ist, sowohl höhenverstellbar als auch schwenkbar und somit in seiner räumlichen Beziehung zu der Förderspirale 24 verstellbar. Durch Verschieben des Werkzeugs 48 mit Hilfe des verstellbaren Werkzeugträgers 26 aus der Mittellage bezüglich der Förderspirale 24 kann ein Werkzeug 48, das mittig von der Förderspirale 24 nicht gegriffen werden würde, mit dieser in Eingriff gebracht werden, so dass in einem solchen Fall auf den Bauteileschieber 30 verzichtet werden kann. Wie es in Fig. 8D gezeigt ist, kann der Bauteileschieber 30 statt auf dem Werkzeugträger 26 auch direkt auf dem Boden der Werkzeugfördervorrichtung 34 angeordnet sein.

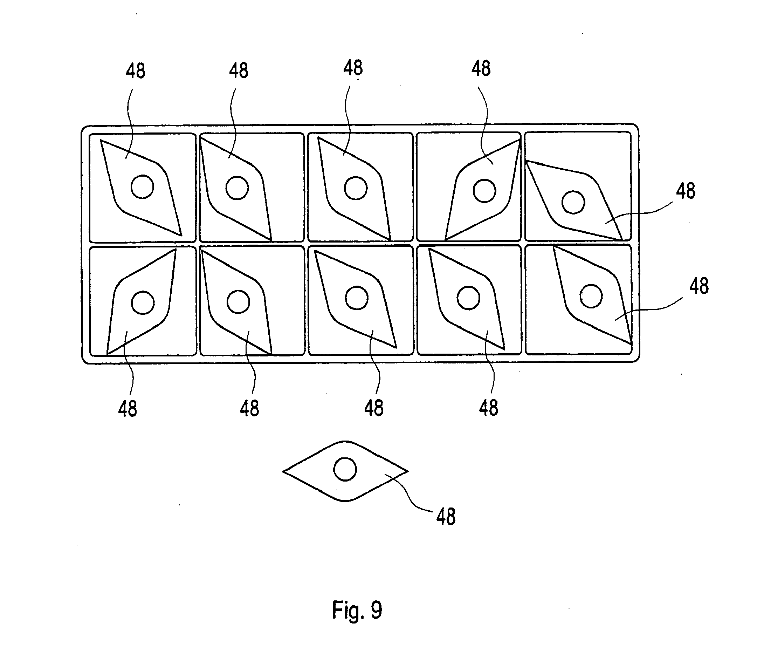

Fig. 9 zeigt eine beispielhafte Werkzeugeinheit gemäß der vorliegenden Erfindung neben einem Einzelwerkstück des gleichen Typs. Gemäß der vorliegenden Erfindung sind beide Ausgabevarianten denkbar, wobei es vorteilhaft ist, kleinere Werkzeuge in Form von Werkzeugeinheiten aus mehreren identischen Werkzeugen auszugeben.

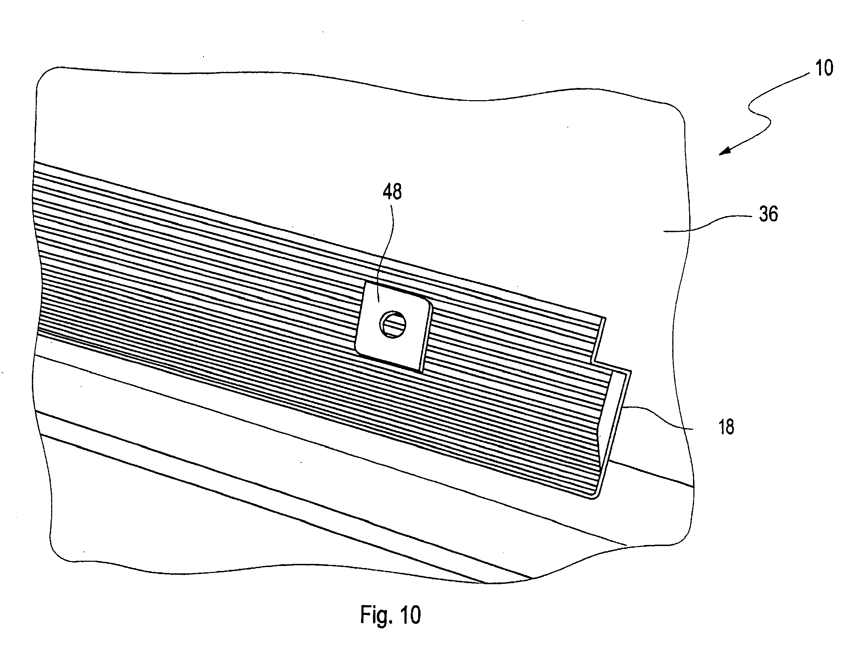

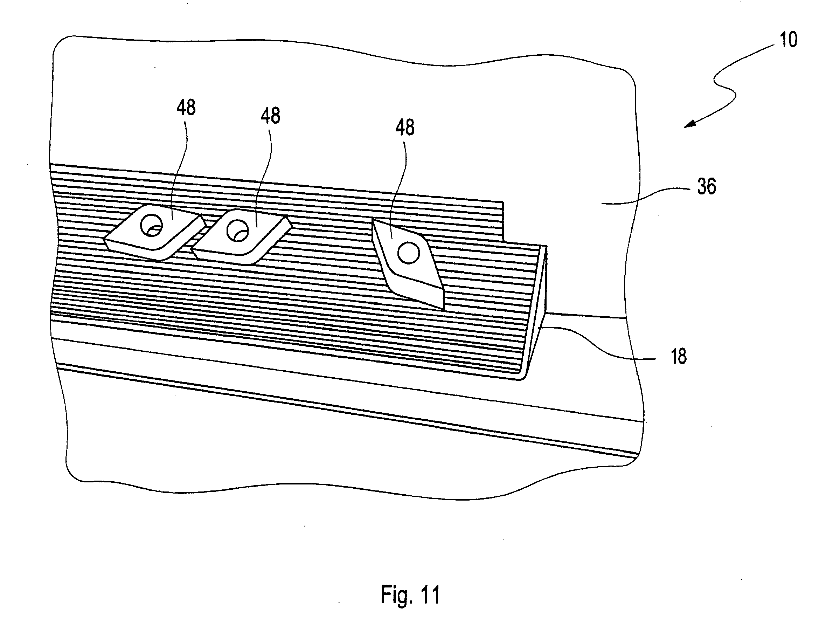

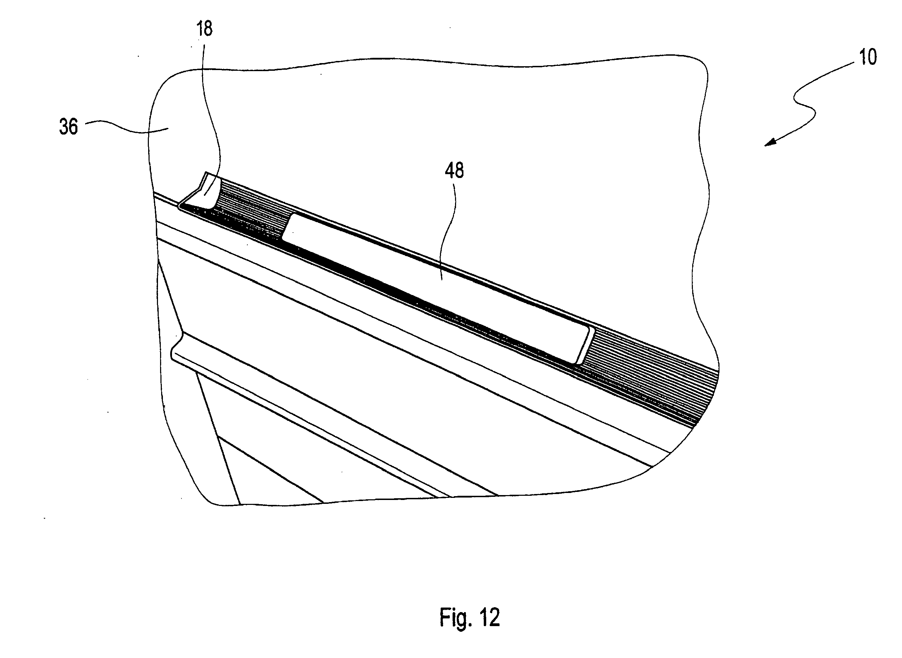

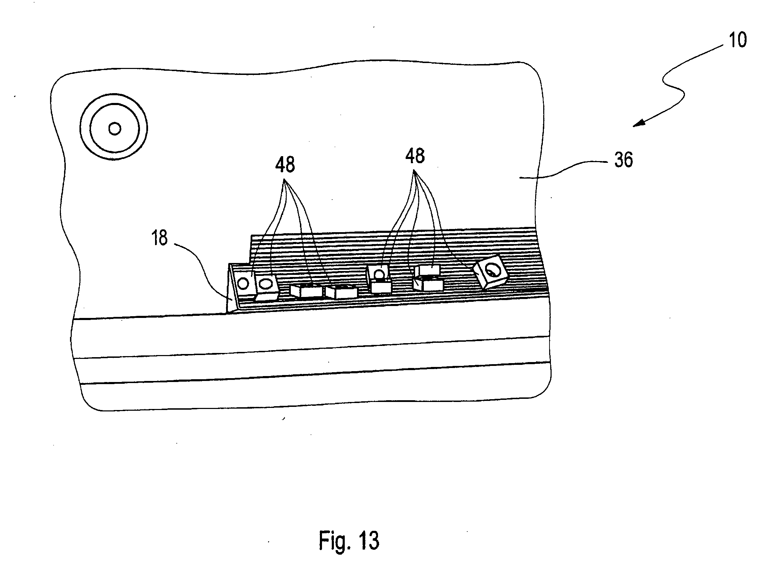

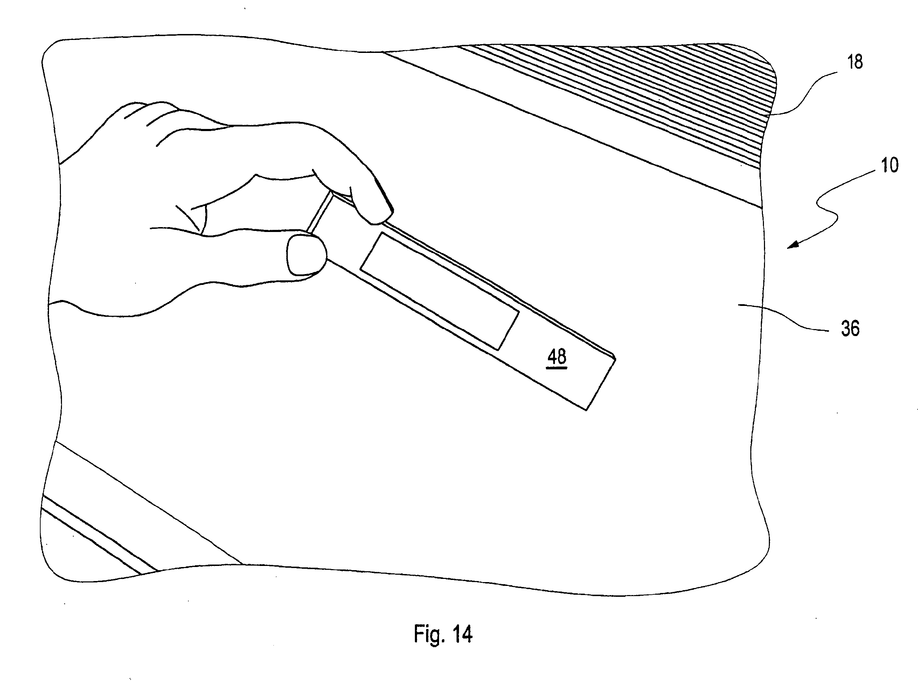

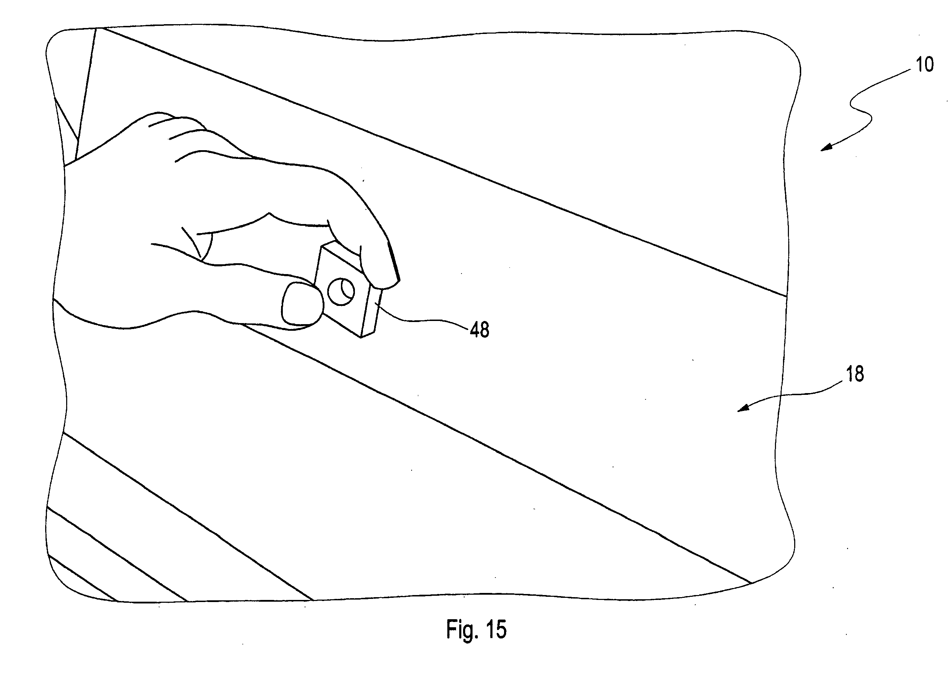

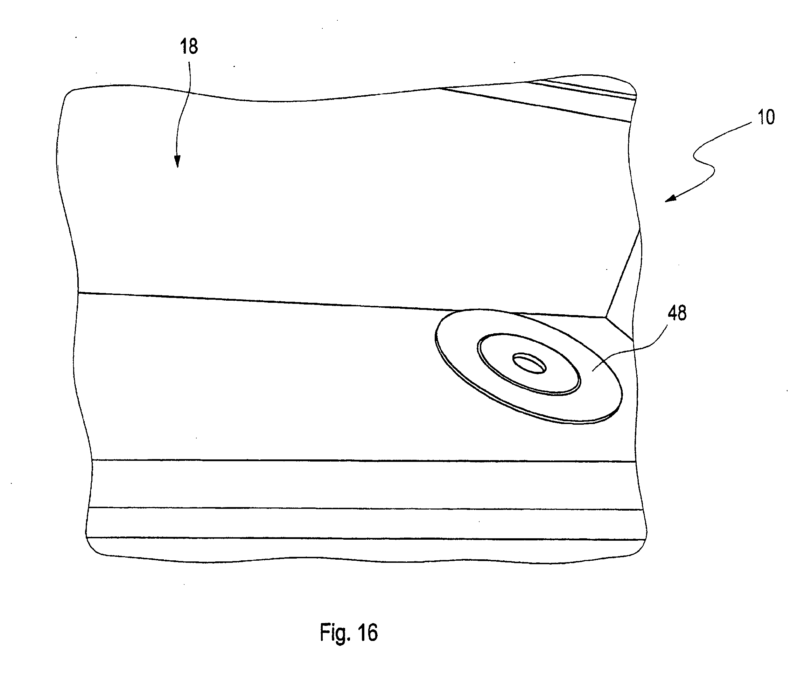

Die Fign. 10 bis 16 zweigen verschiedene beispielhafte Werkzeugausgabestellen des modularen Werkzeugautomaten gemäß der vorliegenden Erfindung. Deutlich zu erkennen ist, dass Werkzeuge verschiedenster Form und Größe durch den erfindungsgemäßen Werkzeugautomaten 10 ausgegeben werden können.

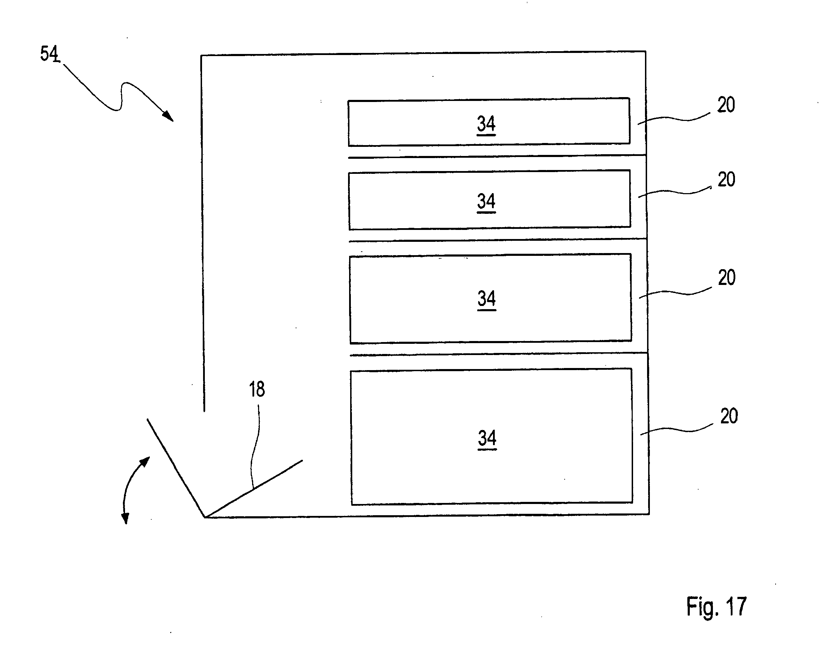

Fig. 17 zeigt sehr schematisch ein Werkzeugmodul 54 in der Seitenansicht, mit vier Werkzeugfächern 20, in denen jeweils eine Werkzeugfördervorrichtung 34 angeordnet ist, die einen Werkzeugträger (nicht gezeigt) und ein Fördermittel wie z. B. die oben beschriebene Förderspirale 24 (nicht gezeigt) umfasst, wobei durch die unterschiedliche Höhe der Werkzeugfächer 20 und Werkzeugfördervorrichtungen 34 angedeutet ist, dass im untersten Werkzeugfach 20 die größten bzw. schwersten und im obersten Werkzeugfach 20 die kleinsten bzw. leichtesten Werkzeuge verstaut sind. Die Werkzeuge aller Werkzeugfächer 20 bzw. der in ihnen aufgenommen Werkzeugfördervorrichtungen 34 fallen auf dieselbe schwenkbare Werkzeugausgabestelle 18, die in Form einer gewinkelten Rinne ausgebildet ist.

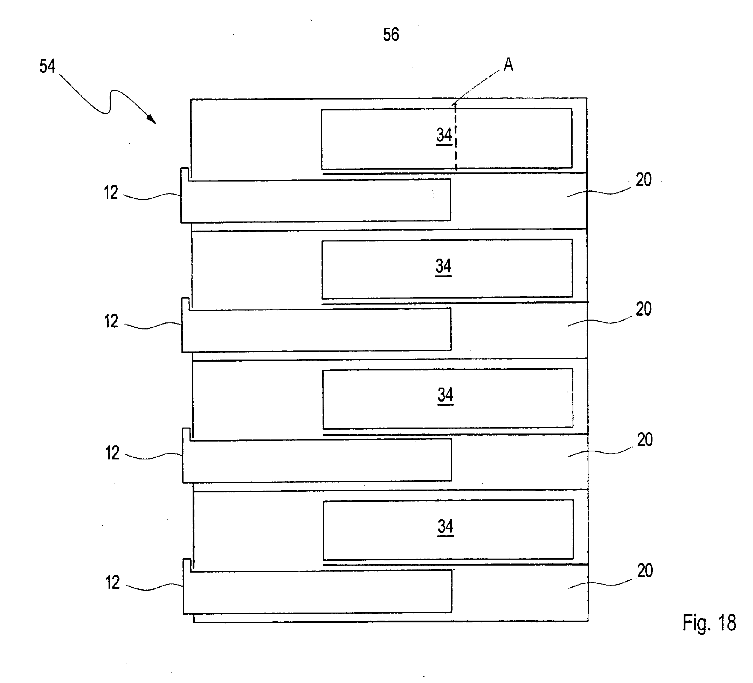

Fig. 18 zeigt sehr schematisch ein Werkzeugmodul 54 in der Seitenansicht, mit vier Werkzeugfächern 20, in denen jeweils eine Werkzeugfördervorrichtung 34 angeordnet ist, die einen Werkzeugträger (nicht gezeigt) und ein Fördermittel wie z. B. die oben beschriebene Förderspirale 24 (nicht gezeigt) von im Wesentlichen gleicher Länge umfasst. Obwohl die Werkzeugfächer 20 hier alle die gleiche Höhe aufweisen, können diese natürlich, ebenso wie es in Fig. 17 gezeigt ist, verschieden sein. Wie es in Fig. 18 gezeigt ist, sind die einzelnen Werkzeugausgabestellen 12 der Werkzeugfächer 20 schubladenförmig ausgebildet und unterhalb der jeweiligen Werkzeugfördervorrichtung 34 angeordnet. Ferner erstrecken sich die Werkzeugausgabestellen 12 in ihrer Schließstellung nicht bis an das Ende des jeweiligen Werkzeugfachs 20, so dass ein Überlappungsbereich 56 gebildet ist.

Alternativ kann sich der Werkzeugträger (nicht gezeigt) der Werkzeugfördervorrichtung 34 von ganz hinten (in Fig. 18 rechts) nur bis etwas über den Beginn des Überlappungsbereichs, d. h. bis zu einer Stelle A erstrecken, die durch eine gestrichelte Linie in Fig. 18 gezeigt ist. Für Werkzeuge, die sich in der

Schließstellung der Werkzeugausgabestelle 12 direkt über dieser befinden, ist dann keine Förderspirale 24 erforderlich. Hier genügt es, einen jeweiligen Haltemechanismus (nicht gezeigt), der das entsprechende Werkzeug hält, durch einen Steuerimpuls zu lösen, so dass das ausgewählte Werkzeug in die Schublade fällt. Der Steuerimpuls kann von dem Anwender zum Beispiel durch Eingabe einer Kenn-Nummer an einem Bedienfeld des Werkzeugautomaten erzeugt werden. Die Förderspirale 24 erstreckt sich in diesem Fall lediglich von hinten bis zur Stelle A.

Alternativ kann sich die Schublade, wie es oben bereits erwähnt ist, lediglich bis zur Werkzeugfördervorrichtung erstrecken, so dass sich das hintere Ende der Schublade etwa in einer gleichen vertikalen Ebene wie das vordere Ende der Werkzeugfördervorrichtung befindet.

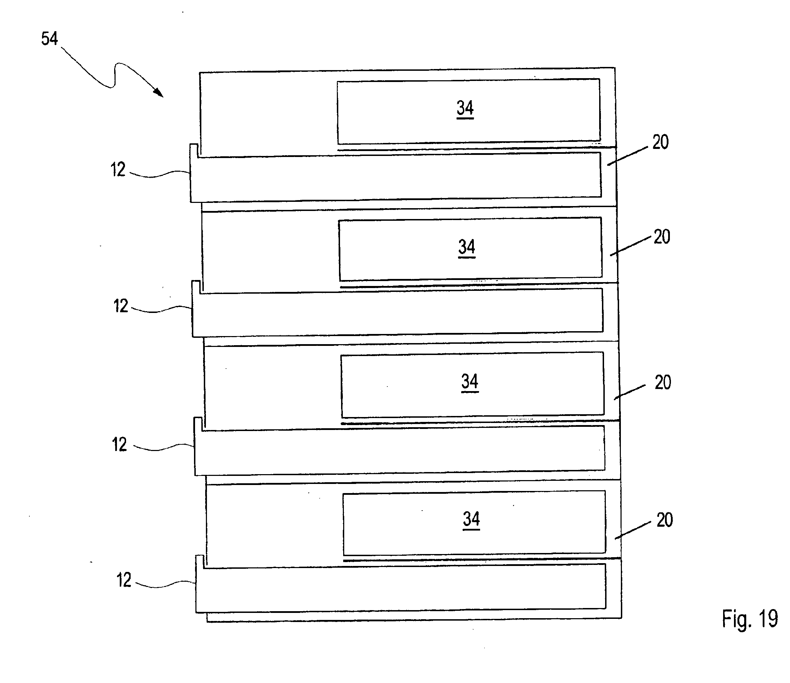

Fig. 19 zeigt sehr schematisch ein Werkzeugmodul 20 in der Seitenansicht, das sich von dem in Fig. 18 nur dadurch unterscheidet, dass sich die Werkzeugausgabestelle 12 ganz nach hinten (rechts in Fig. 19) erstreckt.

Obgleich die vorliegende Erfindung bezüglich der bevorzugten Ausführungsformen offenbart worden ist, um ein besseres Verständnis von diesen zu ermöglichen, sollte wahrgenommen werden, dass die Erfindung auf verschiedene Weisen verwirklicht werden kann, ohne den Umfang der Erfindung zu verlassen. Deshalb sollte die Erfindung derart verstanden werden, dass sie alle möglichen Ausführungsformen und Ausgestaltungen zu den gezeigten Ausführungsformen beinhaltet, die realisiert werden können, ohne den Umfang der Erfindung zu verlassen, wie er in den beigefügten Ansprüchen dargelegt ist.

### Liste der Bezugszeichen

- 10: modularer Werkzeugautomat
- 12: Werkzeugausgabestelle (schubladenartig)
- 14: Werkzeugauswahlvorrichtung
- 16: Anzeige
- 18: Werkzeugausgabestelle (schwenkbar)
- 20: Werkzeugfach
- 22: Federmechanismus
- 24: Förderspirale
- 26: Werkzeugträger
- 26a: Trägerteil von 26 6b Trägerteil von 26
- 28: Rinne von 26
- 30: Bauteile- oder Werkzeugschieber
- 32: Werkzeugeinheit
- 34: Werkzeugfördervorrichtung = 24 + 26
- 36: Trennwände
- 37: Fronttür
- 38: horizontale Achse 2 Frontabdeckung 4 Werkzeugauffangteil 8 Werkstück
- 50: Spiralenträger
- 52: Stellmotor
- 54: Werkzeugmodul
- 56: Überlappungsbereich

## Patentansprüche

1. Modularer Werkzeugautomat (10) mit:
- wenigstens einem Werkzeugausgabemodul (24), das wenigstens ein Werkzeugfach (20), in dem eine Vielzahl von zu Werkzeugklassen zusammengefassten Werkzeugen (48) angeordnet sind, und eine Vielzahl von Werkzeugfördervorrichtungen (34), die jeweils einer der Werkzeugklassen zugeordnet sind und Werkzeuge (48) der einen Werkzeugklasse zu einer Werkzeugausgabestelle (12, 18) fördern, wobei die Werkzeugklassen jeweils durch den Werkzeugtyp, die Werkzeuggröße und/oder das Werkzeuggewicht als Werkzeugparameter definiert sind; und
- einer Werkzeugauswahlvorrichtung (14) zur Auswahl der gewünschten Werkzeugklasse und Menge der auszugebenden Werkzeuge und Aktivierung der der ausgewählten Werkzeugklasse zugeordneten Werkzeugfördervorrichtung (36),
**dadurch gekennzeichnet, dass**
das wenigstens eine Werkzeugausgabemodul (24) eine Mehrzahl von nebeneinander und/oder übereinander angeordneten Werkzeugfächern (20) umfasst, denen entweder jeweils eine eigene oder eine gemeinsame Werkzeugausgabestelle (12, 18) zugeordnet ist,
wobei die Fallhöhe der Werkzeuge (48) von der Werkzeugfördervorrichtung (34) zu der Werkzeugausgabestelle (12, 18) bei schweren Werkzeugen geringer ist als bei leichten Werkzeugen.

2. Werkzeugautomat nach Anspruch 1, **dadurch gekennzeichnet, dass** innerhalb einer oder mehrerer der Werkzeugklassen die Werkzeuge (48) zu Werkzeugeinheiten (32) aus jeweils einer definierten Anzahl von Werkzeugen zusammengefasst sind.

3. Werkzeugautomat nach Anspruch 1 oder 2, **dadurch gekennzeichnet, dass** das wenigstens eine Werkzeugfach (20) primär im Hinblick auf den Parameter Gewicht angeordnet ist.

4. Werkzeugautomat nach einem der Ansprüche 1 bis 3, **dadurch gekennzeichnet, dass** entweder
(a) die Werkzeugausgabestelle (18) in Form einer zwischen einer Schließstellung und einer Offenstellung um eine horizontale Achse (38) schwenkbaren Rinne (18), in die ein ausgewähltes Werkzeug (48) zur Entnahme gefördert wird, oder
(b) in Form einer zwischen einer Schließstellung und einer Offenstellung um eine horizontale Achse klappbaren Klappe, über die ein Auffang- oder Ablagefach zugänglich ist, in das ein ausgewähltes Werkzeug (48) zur Entnahme gefördert wird, oder dass
(c) die Werkzeugausgabestelle (12) in Form einer zwischen einer Schließstellung und einer Offenstellung verschiebbaren Schublade (12), in die ein ausgewähltes Werkzeug (48) zur Entnahme gefördert wird,
ausgebildet ist.

5. Werkzeugautomat nach Anspruch 4, **dadurch gekennzeichnet, dass** die Werkzeugausgabestelle (12, 18) motorisch geschlossen und/oder geöffnet wird.

6. Werkzeugautomat nach einem der Ansprüche 1 bis 3, **dadurch gekennzeichnet, dass** das wenigstens eine Werkzeugfachs (20) in der Art einer aus dem wenigstens einen Werkzeugausgabemodul (54) ausziehbaren Schublade ausgebildet ist.

7. Werkzeugautomat nach einem der Ansprüche 1 bis 6, **dadurch gekennzeichnet, dass** das wenigstens eine Werkzeugfach (20) des wenigstens einen Werkzeugmoduls (54) über eine die Frontseite des wenigstens einen Werkzeugmoduls (54) oder des Werkzeugautomaten (10) verschließende Tür (37) zugänglich ist und die Werkzeugausgabestelle (12, 18) in die Tür (37) integriert ist.

8. Werkzeugautomat nach einem der Ansprüche 1 bis 7, **gekennzeichnet durch** eine Vielzahl von nebeneinander- und/oder übereinander angeordneten Werkzeugausgabemodulen (54).

9. Werkzeugautomat nach einem der Ansprüche 1 bis 8, **dadurch gekennzeichnet, dass** die mehreren Werkzeugfördervorrichtungen (34) jeweils eine Förderspirale (24) mit einem zugehörigen Werkzeugträger (26, 26a, 26b) umfassen, wobei die vorn Werkzeugträger (26, 26a, 26b) getragenen Werkzeuge (48) durch einen Drehantrieb der Förderspirale (24) auf dem Werkzeugträger (26, 26a, 26b) in Richtung der Werkzeugausgabestelle (12, 18) förderbar sind.

10. Werkzeugautomat nach Anspruch 9, **dadurch gekennzeichnet, dass** die Werkzeugträger (26, 26a, 26b) jeweils in Form eines Profilelements ausgebildet sind.

11. Werkzeugautomat nach Anspruch 9 oder 10, gekennzeichnet entweder durch Werkzeugträger, die Werkzeuge hängend fördern oder durch Werkzeugträger (26, 26a, 26b), die die Werkzeuge liegend oder stehend fördern.

12. Werkzeugautomat nach einem der Ansprüche 9 bis 11, **gekennzeichnet durch** Werkzeugfördervorrichtungen (34), bei denen die Werkzeugträger (26, 26a, 26b) jeweils entweder in der zugeordneten Förderspirale (24) angeordnet sind oder außerhalb der zugeordneten Förderspirale (24) angeordnet sind.

13. Werkzeugautomat nach einem der Ansprüche 9 bis 12, **dadurch gekennzeichnet, dass** die Förderspiralen (24) jeweils durch den zugeordneten Werkzeugträger (26, 26a, 26b) gestützt werden.

14. Werkzeugautomat nach einem der Ansprüche 1 bis 13, **dadurch gekennzeichnet, dass** der Höhenabstand der einem Werkzeugfach (20) zugeordneten Werkzeugfördervorrichtungen (34) relativ zum Boden des Werkzeugfachs (20) einstellbar ist.

15. Werkzeugautomat nach einem der Ansprüche 1 bis 14, **dadurch gekennzeichnet, dass** die Werkzeugausgabestelle (12, 18) das Vorhandensein eines Werkzeugs (48) visuell und/oder akustisch angibt.

## Claims

1. Modular automated tool dispenser (10) comprising:
at least one tool delivery module (54) comprising at least one tool storage compartment (20), in which a plurality of tools (48) combined in tool classes are arranged, and a plurality of tool conveying devices (34), each tool conveying device assigned to one tool class and configured to convey tools of the one tool class to a tool delivery point (12, 18), wherein the tool classes are each defined by the tool type, the tool size and/or the tool weight as tool parameters; and
a tool selection device (14) for selecting the desired tool class and number of tools to be delivered and for activating the tool conveying device (34) that is associated with the selected tool class,
**characterized in that**
the at least one tool delivery module (54) comprises a plurality of tool storage compartments (20) that are arranged beside one another and/or above one another and that have each assigned a unique or a common tool delivery point (12, 18),
wherein a drop height of the tools (48) from the tool conveying device (34) to the tool delivery point (12, 18) is smaller in the case of heavier tools than in the case of lighter tools.

2. Automated tool dispenser according to claim 1, **characterized in that** within one or more of the tool classes the tools (48) are grouped together to form tool units (32) comprising in each case a defined number of tools.

3. Automated tool dispenser according to claim 1 or 2, **characterized in that** at least one tool storage compartment (20) is arranged primarily with regard to the parameter of weight.

4. Automated tool dispenser according to any one of claims 1 to 3, **characterized in that**
(a) the tool delivery point (18) is constituted in the form of a channel (18), the channel able to be swiveled between a closed position and an open position about a horizontal axis, and a selected tool (48) being conveyed into the channel (18) for removal, or
(b) in the form of a flap, the flap able to be folded about a horizontal axis between a closed position and an open position, a collection compartment being accessible via the flap, and a selected tool (48) being conveyed into the flap for removal, or
(c) the tool delivery point (12) is constituted in form of a drawer (12) that can be displaced between a closed position and an open position, and the selected tool (48) being conveyed into the drawer for removal.

5. Automated tool dispenser according to claim 4, **characterized in that** the tool delivery point (12, 18) is closed and/or opened by a motor.

6. Automated tool dispenser according to any one of claims 1 to 3, **characterized in that** the at least one tool compartment (20) is constituted in the manner of a drawer which can be withdrawn from the at least one tool delivery module (54).

7. Automated tool dispenser according to any one of claims 1 to 6, **characterized in that** the at least one tool compartment (20) is of the at least one tool module (54) is accessible via a door (37) closing the front side of the at least one tool module (54) or of the automated tool dispenser and the tool delivery point (12,18) is integrated into the door (37).

8. Automated tool dispenser according to any one of claims 1 to 7, **characterized by** a plurality of tool delivery modules (54) arranged beside one another and/or above one another.

9. Automated tool dispenser according to any one of claims 1 to 8, **characterized in that** the plurality of tool conveying devices (34) each comprise a spiral conveyor (24) with an associated tool carrier (26, 26a, 26b), wherein the tools (48) carried by the tool carrier (26, 26a, 26b) can be conveyed by a rotary drive of the spiral conveyor (24) on the tool carrier (26, 26a, 26b) in the direction of the tool delivery point (12,18).

10. Automated tool dispenser according to claim 9, **characterized in that** the tool carriers (26, 26a, 26b) are each constituted in the form of a profiled element.

11. Automated tool dispenser according to claim 9 or 10, characterized either by tool carriers (26, 26a, 26b) which convey tools in a suspended manner or by tool carriers (26, 26a, 26b) which convey the tools lying down or standing.

12. Automated tool dispenser according to any one of claims 9 to 11, **characterized by** tool conveying devices (34), wherein the tool carriers (26, 26a, 26b) are arranged in each case in the associated spiral conveyor (24) or outside the associated spiral conveyor (24).

13. Automated tool dispenser according to any one of claims 9 to 12, **characterized in that** the spiral conveyors (24) are each supported by the associated tool carrier (26, 26a, 26b).

14. Automated tool dispenser according to any one of claims 1 to 13, **characterized in that** the height distance of the tool conveying devices (34) associated with a tool compartment (20) is adjustable relative to the bottom of the tool compartment (20).

15. Automated tool dispenser according to any one of claims 1 to 14, **characterized in that** the tool delivery point (12, 18) visually and/or acoustically indicates the presence of a tool (48).

## Revendications

1. Distributeur automatique (10) d'outils modulaire, comprenant :
- au moins un module de distribution (24) d'outils comportant au moins un compartiment (20) à outils où sont disposés une pluralité d'outils (48) regroupés par classes d'outils, et une pluralité de dispositifs de transport (34) d'outils, dont chacun est affecté à l'une des classes d'outils respectives, et qui convoient les outils (48) d'une classe d'outils vers un point de distribution d'outils (12, 18), les classes d'outils étant respectivement définies par le type, les dimensions et/ou le poids des outils en tant que paramètres d'outils ; et
- un dispositif de sélection (14) d'outils permettant de sélectionner la classe et la quantité souhaitées pour les outils à distribuer, et d'activer le dispositif de transport (36) d'outils affecté à la classe d'outils sélectionnée,
**caractérisé en ce que**
le au moins un module de distribution (24) d'outils comprend une pluralité de compartiments (20) à outils disposés côte à côte et/ou superposés, auxquels sont affectés soit un point de distribution d'outils propre à chacun, soit un point de distribution d'outils commun (12, 18),
la hauteur de chute des outils (48) du dispositif de transport (34) d'outils au point de distribution d'outils (12, 18) étant pour des outils lourds inférieure à celle pour des outils légers.

2. Distributeur automatique d'outils selon la revendication 1, **caractérisé en ce qu'**à l'intérieur d'une ou de plusieurs classes d'outils, les outils (48) sont regroupés en unités (32) d'outils constituées chacun d'un nombre d'outils défini.

3. Distributeur automatique d'outils selon la revendication 1 ou 2, **caractérisé en ce que** le au moins un compartiment (20) à outils est disposé d'abord en fonction du paramètre qu'est le poids en premier lieu.

4. Distributeur automatique d'outils selon l'une des revendications 1 à 3, **caractérisé en ce que** soit
(a) le point de distribution (18) d'outils est réalisé sous la forme d'une gouttière (18) pouvant pivoter autour d'un axe horizontal (38) entre une position de fermeture et une position d'ouverture, où est transporté un outil (48) sélectionné pour prélèvement, soit
(b) sous la forme d'un volet pouvant être rabattu autour d'un axe horizontal entre une position de fermeture et une position d'ouverture, rendant accessible un compartiment de collecte ou de dépôt où est transporté un outil (48) sélectionné pour prélèvement, ou bien **en ce que**
(c) le point de distribution (12) d'outils est réalisé sous la forme d'un tiroir (12) coulissant entre une position de fermeture et une position d'ouverture, où est transporté un outil (48) sélectionné pour prélèvement.

5. Distributeur automatique selon la revendication 4, **caractérisé en ce que** le point de distribution (12, 18) d'outils est fermé et/ou ouvert à l'aide d'un moteur.

6. Distributeur automatique d'outils selon l'une des revendications 1 à 3, **caractérisé en ce que** le au moins un compartiment (20) à outils est réalisé à la manière d'un tiroir pouvant être sorti du au moins un module de distribution (54) d'outils.

7. Distributeur automatique d'outils selon l'une des revendications 1 à 6, **caractérisé en ce que** le au moins un compartiment (20) à outils du au moins un module d'outillage (54) est accessible par une porte (37) fermant la façade du au moins un module d'outillage (54) ou du distributeur automatique (10) d'outils, et **en ce que** le point de distribution (12, 18) d'outils est intégré à la porte (37).

8. Distributeur automatique d'outils selon l'une des revendications 1 à 7, **caractérisé par** une pluralité de modules de distribution (54) d'outils disposés côte à côte et/ou superposés.

9. Distributeur automatique d'outils selon l'une des revendications 1 à 8, **caractérisé en ce que** les plusieurs dispositifs de transport (34) d'outils comportent chacun une spirale de transport (24) avec un porte-outil associé (26, 26a, 26b), les outils (48) supportés par le porte-outil (26, 26a, 26b) pouvant être convoyés vers le point de distribution (12, 18) d'outils par un entraînement rotatif de la spirale de transport (24) sur le porte-outil (26, 26a, 26b).

10. Distributeur automatique d'outils selon la revendication 9, **caractérisé en ce que** les porte-outils (26, 26a, 26b) sont réalisés chacun sous la forme d'un élément profilé.

11. Distributeur automatique d'outils selon la revendication 9 ou 10, caractérisé soit par des porte-outils, transportant des outils suspendus, soit par des porte-outils (26, 26a, 26b) transportant les outils debout ou couchés.

12. Distributeur automatique d'outils selon l'une des revendications 9 à 11, **caractérisé par** des dispositifs de transport d'outils (34) où les porte-outils (26, 26a, 26b) sont disposés chacun soit dans la spirale de transport (24) associée, soit en dehors de la spirale de transport (24) associée.

13. Distributeur automatique d'outils selon l'une des revendications 9 à 12, **caractérisé en ce que** les spirales de transport (24) sont soutenues chacune par le porte-outil (26, 26a, 26b) correspondant.

14. Distributeur automatique d'outils selon l'une des revendications 1 à 13, **caractérisé en ce que** l'espacement en hauteur des dispositifs de transport (34) d'outils affectés à un compartiment (20) à outils peut être réglé par rapport au fond du compartiment (20) à outils.

15. Distributeur automatique d'outils selon l'une des revendications 1 à 14, **caractérisé en ce que** le point de distribution (12, 18) d'outils signale visuellement et/ou acoustiquement la présence d'un outil (48).
